# FASCICULE DE BREVET EUROPEEN

(11) **EP 4 561 964 B1**
(45) Date de publication et mention de la délivrance du brevet: **10.06.2026**
(21) Numéro de dépôt: 23751677.8
(22) Date de dépôt: 25.07.2023
(51) Int. Cl.: C04B 41/50, C04B 41/00, C04B 41/85, C03C 1/00, C03C 3/078, F16D 69/02

(54) **PROCEDE DE PROTECTION CONTRE L'OXYDATION D'UNE PIECE EN MATERIAU COMPOSITE COMPRENANT DU CARBONE**
VERFAHREN ZUM SCHUTZ GEGEN OXIDATION EINES KOHLENSTOFFHALTIGEN VERBUNDSTOFFTEILS
METHOD FOR PROTECTION AGAINST OXIDATION OF A COMPOSITE MATERIAL PART COMPRISING CARBON

(30) Priorité: 26.07.2022 FR 2207653
(43) Date de publication de la demande: 04.06.2025
(73) Titulaire: Safran Landing Systems, 78140 Vélizy-Villacoublay (FR); Centre National de la Recherche Scientifique, 75016 Paris (FR); Centrale Lille Institut, 59651 Villeneuve-d'Ascq Cedex (FR); Ecole Nationale Superieure de Chimie de Lille, 59650 Villeneuve d'Ascq (FR); Université de Lille, 59800 Lille (FR)
(72) Inventeur: ROUSSEAU, Guillaume, 31130 BALMA (FR); ALOUSQUE, Fanny, 77550 MOISSY-CRAMAYEL (FR); MEAR, François, 59655 Villeneuve-d'Ascq (FR); MONTAGNE, Lionel, 59655 Villeneuve-d'Ascq (FR)
(74) Mandataire: Cabinet Beau de Loménie
(86) Numéro de dépôt international: PCT/FR2023/051155
(87) Numéro de publication internationale: WO 2024/023435

(56) Documents cités:
- FR-A1- 3 095 436

## Description

### Domaine Technique

L'invention concerne la protection contre l'oxydation de pièces en matériau composite contenant du carbone, c'est-à-dire en un matériau comprenant un renfort fibreux densifié par une matrice et dans lequel le renfort fibreux et/ou la matrice et/ou un revêtement d'interphase entre fibres du renfort et matrice est en carbone. Un domaine particulier d'application de l'invention est la protection contre l'oxydation de pièces en matériau composite carbone/carbone (C/C), notamment de disques de freins en composite C/C, et en particulier de disques de freins d'aéronef.

### Technique antérieure

Les matériaux utilisés pour le freinage aéronautique sont des composites C/C. Ces matériaux ont été choisis pour cette application du fait de leur légèreté, leur capacité d'absorption thermique et leurs bonnes propriétés tribologiques. Néanmoins, ils sont susceptibles d'être oxydés, par l'oxygène de l'air notamment, aux températures d'utilisation qui sont typiquement supérieures à 450°C. Cette oxydation peut être également catalysée par les produits déverglaçants utilisés dans les aéroports. Plusieurs solutions ont été développées afin de prolonger la durée de vie d'un matériau comprenant du carbone exposé à des températures élevées en atmosphère oxydante. En particulier, on peut mettre en œuvre une solution de protection bi-couches comprenant une couche interne anticatalytique à base de métaphosphate d'aluminium Al(PO₃)₃ et une couche externe empêchant la diffusion de l'oxygène dans le matériau. Une telle solution fournit une protection satisfaisante mais il demeure souhaitable de fournir de nouvelles solutions de protection de mise en œuvre plus simple et qui fournissent une protection contre l'oxydation thermique, et éventuellement catalytique, au moins équivalente.

FR3095436A1 concerne un procédé de protection contre l'oxydation d'une pièce en matériau composite comprenant du carbone par imprégnation de la porosité interne de la pièce par une composition d'imprégnation comprenant un mélange de précurseurs d'un verre de protection contre l'oxydation.

### Exposé de l'invention

L'invention concerne un procédé de protection contre l'oxydation d'une pièce en matériau composite comprenant du carbone, comprenant :
- l'imprégnation d'une porosité interne de la pièce par une composition d'imprégnation comprenant en pourcentages massiques (i) entre 1% et 60% de silice colloïdale, (ii) entre 0,5% et 20% d'un précurseur de fondant comprenant au moins un nitrate de métal alcalin M1, (iii) entre 0,5% et 20% d'un précurseur de modificateur de réseau comprenant au moins un nitrate d'un élément M2 qui est choisi parmi les métaux alcalino-terreux, les métaux de transition, les métaux pauvres ou les lanthanides ou un oxynitrate d'un élément M2 qui est choisi parmi les métaux ou les lanthanides, et (iv) entre 20% et 88% d'eau, et
- la réalisation d'un traitement thermique de vitrification sur la pièce imprégnée par la composition d'imprégnation de sorte à obtenir un verre de protection contre l'oxydation comprenant au moins de la silice, un oxyde de M1 et un oxyde de M2. L'invention propose l'emploi d'une composition d'imprégnation de formulation particulière qui permet d'obtenir une bonne protection contre l'oxydation à haute température tout en permettant une mise en œuvre en une seule couche protectrice et la réalisation d'un unique traitement thermique, simplifiant ainsi la mise en place de la protection par rapport à la solution bi-couches décrite plus haut. En particulier, l'invention permet de s'affranchir d'une étape préalable d'imprégnation par un phosphate d'aluminium de sorte à former une couche interne de protection et du traitement thermique de formation de la protection anti-oxydation associé, l'apport des composés protecteurs étant réalisé en une seule étape d'imprégnation et un unique traitement thermique de vitrification étant réalisé.

Dans un exemple de réalisation, le précurseur de fondant comprend au moins du nitrate de sodium, du nitrate de potassium, ou un mélange de ces composés.

Le choix de tels précurseurs de fondant est particulièrement adapté au traitement des pièces de friction.

Dans un exemple de réalisation, le précurseur de modificateur de réseau comprend au moins un nitrate d'un métal alcalino-terreux, en particulier du nitrate de calcium et/ou du nitrate de magnésium. Le diagramme de phases de ces composés est connu et facilement accessible ce qui permet d'optimiser les températures de traitement thermique en permettant de les diminuer grandement en passant d'environ 1400 °C à environ 1000 °C.

En variante ou en combinaison, le précurseur de modificateur de réseau comprend au moins un nitrate d'un métal de transition ou d'un métal pauvre. Le choix d'un tel composé permet une optimisation de la température de traitement thermique en permettant de la diminuer grandement en passant d'environ 1400 °C à environ 1000 °C.

Dans un exemple de réalisation, la composition d'imprégnation comprend en outre un stabilisant acide présent en une teneur massique comprise entre 0,05% et 10%. Le stabilisant acide participe à éviter une gélification de la composition d'imprégnation, et donc à faciliter l'imprégnation de la porosité interne de la pièce. En particulier, le stabilisant acide peut être choisi parmi l'acide borique H₃BO₃, l'acide phosphorique H₃PO₄, l'acide nitrique HNO₃ ou un mélange de ces composés.

Le choix de l'acide borique H₃BO₃ ou de l'acide phosphorique H₃PO₄ permet d'améliorer davantage encore la protection conférée par le verre en permettant la formation d'oxyde de phosphore ou d'oxyde de bore protecteurs après le traitement thermique de vitrification.

Dans un exemple de réalisation, la composition d'imprégnation comprend en pourcentages massiques :
- entre 10% et 60% de silice colloïdale,
- entre 0,5% et 20% de précurseur de fondant,
- entre 0,5% et 20% de précurseur de modificateur de réseau,
- entre 0,05% et 10% de stabilisant acide, et
- de l'eau entre 20% et 88%.

Selon cet exemple, la composition d'imprégnation peut être dépourvue de phosphate métallique, en particulier de phosphate d'aluminium.

Selon une variante, la composition d'imprégnation comprend en pourcentages massiques :
- entre 1% et 10% de silice colloïdale,
- entre 20% et 35% d'un phosphate d'aluminium,
- entre 1% et 7% de précurseur de fondant,
- entre 1% et 5% de précurseur de modificateur de réseau, et
- de l'eau entre 50% et 77%,
et on obtient, après le traitement thermique, le verre de protection contre l'oxydation et une phase aluminophosphate anti-catalytique. La phase aluminophosphate anti-catalytique peut être une phase de Al(PO₃)₃.

Ce cas correspond à des compositions d'imprégnation comprenant du phosphate d'aluminium dissous. Selon cette variante, on peut s'affranchir de stabilisant acide car le phosphate d'aluminium est lui-même acide et évite la gélification de la composition d'imprégnation. Avantageusement, la phase aluminophosphate obtenue en plus du verre dans cette variante permet d'améliorer la résistance à l'oxydation catalytique.

Dans un exemple de réalisation, la pièce est une pièce de friction, par exemple un disque de frein. En particulier, la pièce de friction peut être en matériau composite carbone/carbone.

### Brève description des dessins

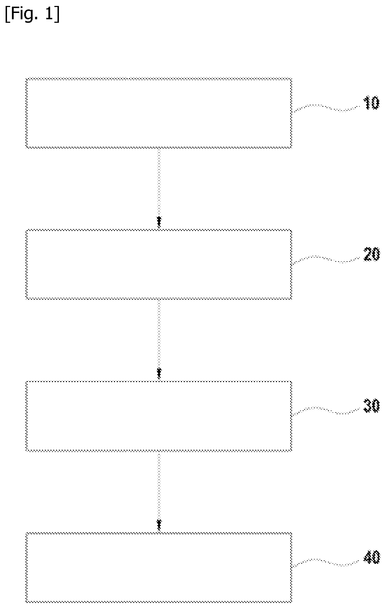

[Fig. 1] La figure 1 est un ordinogramme montrant une succession d'étapes pouvant être mise en œuvre dans le cadre d'un exemple de procédé selon l'invention.

### Description des modes de réalisation

Dans la description qui suit, on envisage la protection contre l'oxydation de pièces en matériau composite C/C, plus particulièrement de disques de freins, comme des disques de freins aéronautiques. Plus généralement, l'invention est applicable à la protection contre l'oxydation de toutes pièces en matériau composite contenant du carbone.

On va tout d'abord décrire un exemple de procédé selon l'invention en lien avec l'ordinogramme de la figure 1.

La pièce en matériau composite comprenant du carbone peut être obtenue de manière connue en soi, par exemple en densifiant un renfort fibreux par une phase de matrice de carbone. Cette densification peut s'effectuer par voie liquide par imprégnation et pyrolyse d'un précurseur polymère ou par voie gazeuse par infiltration chimique en phase vapeur. La pièce obtenue présente une porosité de surface et une porosité interne en communication avec la porosité de surface et située sous la surface de la pièce.

Une première étape consiste à imprégner la porosité accessible du matériau composite par un agent mouillant (étape 10). Cette étape est connue en soi. On peut typiquement utiliser à cet effet une solution aqueuse d'un agent mouillant tel que par exemple le produit commercialisé par la société allemande Sasol Gmbh sous la dénomination « Marlophen NP9 ». La présence de l'agent mouillant permet de faciliter la pénétration de la composition d'imprégnation dans la porosité accessible du matériau composite.

Après imprégnation par l'agent mouillant et séchage (étape 20), la composition d'imprégnation est appliquée sur la surface extérieure de la pièce (étape 30). La composition d'imprégnation peut être appliquée au pinceau ou par projection (i.e. pulvérisation au pistolet). On peut typiquement appliquer une quantité de composition d'imprégnation par unité de surface de la pièce traitée comprise entre 5 mg/cm² et 200 mg/cm².

La composition d'imprégnation comprend une association de composés particulière qui permet, comme indiqué plus haut, d'obtenir une bonne protection contre l'oxydation à haute température tout en permettant une mise en œuvre en une seule couche protectrice et la réalisation d'un unique traitement thermique, simplifiant ainsi la mise en place de la protection.

La composition d'imprégnation est sous la forme d'une suspension comprenant une phase aqueuse dans laquelle le précurseur de fondant et le précurseur de modificateur de réseau sont dissous, et une phase solide en suspension dans la phase aqueuse comprenant la silice colloïdale.

Les particules de silice colloïdale peuvent avoir une taille moyenne inférieure ou égale à 1000 nm, par exemple inférieure ou égale à 100 nm. L'emploi de telles particules fines facilite l'imprégnation au sein de la porosité interne de la pièce en matériau composite. De la sorte, le verre protecteur est formé, après le traitement thermique de vitrification, sur la surface externe du matériau composite mais également à l'intérieur du matériau à protéger, sous cette surface externe, ce qui permet de le mettre à l'abri des agressions extérieures rencontrées en fonctionnement, améliorant ainsi la protection. Sauf mention contraire, par « taille moyenne », on désigne la dimension donnée par la distribution granulométrique statistique à la moitié de la population, dite D50.

Le fondant est obtenu à partir du précurseur de fondant lors du traitement thermique et permet de diminuer la température de fusion du verre, ce qui permet son ramollissement, lors du traitement thermique de formation, de sorte à former le verre à l'intérieur de la pièce à des températures compatibles d'une mise en œuvre industrielle. Selon un exemple, le précurseur de fondant est choisi parmi : le nitrate de lithium LiNO₃, le nitrate de sodium NaNO₃, le nitrate de potassium KNO₃, le nitrate de rubidium RbNO₃, le nitrate de césium CsNO₃, et les mélanges de ces composés. Dans le cas d'un mélange, la somme des teneurs massiques des composés présents est comprise dans la fourchette de teneur indiquée plus haut pour le précurseur de fondant. En particulier, le précurseur de fondant peut être choisi parmi : le nitrate de sodium, le nitrate de potassium, et les mélanges de ces composés.

Le ou les nitrates précurseurs de fondant peuvent être utilisés sous une forme hydratée ou non hydratée.

Le précurseur de modificateur de réseau se transforme lors du traitement thermique en modificateur de réseau qui est un composé qui permet d'ajuster les propriétés du verre, comme la résistance à l'hydrolyse, la résistance à une attaque acide ou basique, la température de fusion ou la viscosité. Selon un exemple, le précurseur de modificateur de réseau est choisi parmi : le nitrate de magnésium Mg(NO₃)₂, le nitrate de calcium Ca(NO₃)₂, le nitrate de strontium Sr(NO₃)₂, le nitrate de baryum Ba(NO₃)₂, l'oxynitrate de vanadium VO(NO₃)₃, le nitrate de manganèse Mn(NO₃)₂, le nitrate de fer Fe(NO₃)₃, le nitrate de cobalt Co(NO₃)₂, le nitrate de cuivre Cu(NO₃)₂, le nitrate de zirconium Zr(NO₃)₄, le nitrate de zinc Zn(NO₃)₂, le nitrate de cadmium Cd(NO₃)₂, le nitrate de plomb Pb(NO₃)₂, le nitrate de lanthane La(NO₃)₃, le nitrate de cérium Ce(NO₃)₃, et les mélanges de ces composés. Comme pour le précurseur de fondant, dans le cas d'un mélange, la somme des teneurs massiques des composés présents est comprise dans la fourchette de teneur indiquée plus haut pour le précurseur de modificateur de réseau. En particulier, le précurseur de modificateur de réseau peut être choisi parmi : le nitrate de magnésium, le nitrate de calcium, et les mélanges de ces composés. L'emploi de ces composés est avantageux du fait de leur facilité d'approvisionnement. Selon une variante, le précurseur de modificateur de réseau peut être un nitrate d'un métal pauvre, par exemple du nitrate de zinc. Le ou les nitrates précurseurs de modificateur de réseau peuvent être utilisés sous une forme hydratée ou non hydratée.

D'une manière générale, on peut utiliser les associations suivantes dans la composition d'imprégnation :
- le précurseur de fondant est le nitrate de sodium et le précurseur de modificateur de réseau du nitrate de calcium,
- le précurseur de fondant est le nitrate de sodium et le précurseur de modificateur de réseau du nitrate de zinc,
- le précurseur de fondant est un mélange de nitrate de sodium et de nitrate de potassium et le précurseur de modificateur de réseau est le nitrate de calcium, ou
- le précurseur de fondant est le nitrate de sodium et le précurseur de modificateur de réseau un mélange de nitrate de calcium et de nitrate de magnésium.

La composition d'imprégnation peut comprendre d'autres composés comme un stabilisant acide qui peut être choisi parmi l'acide borique H₃BO₃, l'acide phosphorique H₃PO₄, l'acide nitrique HNO₃, ou un mélange de ces composés.

La composition d'imprégnation peut être dépourvue de silicate de sodium (Na₂O)ₓSiO₂ avec x strictement positif. La composition d'imprégnation apporte séparément de la silice colloïdale et le métal alcalin M1 ce qui permet de moduler plus finement le rapport M1/Si et d'améliorer ainsi l'efficacité du verre de protection contre l'oxydation par rapport à l'emploi d'une solution à base de silicate de sodium. Le fait de s'affranchir du silicate de sodium participe en outre à améliorer la stabilité dans le temps de la composition d'imprégnation (moindre risque de gélification). D'une manière générale, la composition d'imprégnation est constituée essentiellement par la silice colloïdale, le précurseur de fondant, le précurseur de modificateur de réseau et l'eau, avec éventuellement présence du phosphate d'aluminium et/ou du stabilisant acide, chacun des constituants étant présent dans les teneurs indiquées plus haut.

La composition d'imprégnation est obtenue par mélange des différents constituants, à noter que dans le cas où la composition d'imprégnation est dépourvue de phosphate métallique, il peut être préférable d'ajouter le stabilisant acide à la silice colloïdale avant ajout du précurseur de fondant et du précurseur de modificateur de réseau, de sorte à obtenir un pH inférieur au point iso-électrique de la silice à ne pas avoir de réaction entre la silice et les autres cations.

A titre d'exemple de composition d'imprégnation utilisable dans le cadre de la présente invention, on peut citer la formulation suivante dans laquelle les pourcentages sont massiques : 4 % de SiO₂, 2 % de Ca(NO₃)₂, 24 % de phosphate d'aluminium Al(H₂PO₄)₃ sans eau, 67 % d'H₂O et 3% NaNO₃.

La composition d'imprégnation appliquée imprègne la porosité interne de la pièce et peut être présente à l'intérieur de la pièce sur une profondeur supérieure ou égale à 1 mm, par exemple supérieure ou égale à 2 mm, par exemple comprise entre 2 mm et 10 mm. La profondeur est mesurée par rapport à la surface externe de la pièce. On réalise ensuite le traitement thermique de vitrification sur la pièce imprégnée par la composition d'imprégnation (étape 40). Le traitement thermique de vitrification est réalisé en élevant la température jusqu'à une température comprise entre 700°C et 1200°C de sorte à obtenir le verre de protection contre l'oxydation. Cette température peut être imposée pendant une ou plusieurs heures, par exemple pendant une durée allant de 10 heures à 15 heures. Le traitement thermique de vitrification peut être réalisé sous atmosphère neutre, par exemple sous azote (N₂). A la suite de ce traitement thermique, le verre de protection contre l'oxydation est présent dans les pores présents à l'intérieur de la pièce. Le verre de protection contre l'oxydation peut être présent à l'intérieur de la pièce sur une profondeur supérieure ou égale à 1 mm, par exemple supérieure ou égale à 2 mm, mesurée par rapport à la surface externe de la pièce. Cette profondeur peut être comprise entre 2 mm et 10 mm.

Selon un exemple, le verre de protection contre l'oxydation peut avoir la composition suivante, en pourcentages molaires, SiO₂ entre 68% et 73%, Na₂O entre 15% et 23% et CaO entre 5% et 11%. D'autres exemples de compositions de verre sont indiqués ci-dessous (pourcentages molaires) :
- 67% SiO₂ - 22% Na₂O - 11% ZnO,
- 70% SiO₂ - 15% Na₂O - 5% K₂O - 10% CaO,
- 70% SiO₂ - 20% Na₂O - 5% CaO - 5% MgO.

L'expression « comprise entre ... et ... » doit se comprend comme incluant les bornes.

## Revendications

1. Procédé de protection contre l'oxydation d'une pièce en matériau composite comprenant du carbone, comprenant :
- l'imprégnation (30) d'une porosité interne de la pièce par une composition d'imprégnation comprenant en pourcentages massiques (i) entre 1% et 60% de silice colloïdale, (ii) entre 0,5% et 20% d'un précurseur de fondant comprenant au moins un nitrate de métal alcalin M1, (iii) entre 0,5% et 20% d'un précurseur de modificateur de réseau comprenant au moins un nitrate d'un élément M2 qui est choisi parmi les métaux alcalino-terreux, les métaux de transition, les métaux pauvres ou les lanthanides ou un oxynitrate d'un élément M2 qui est choisi parmi les métaux ou les lanthanides, et (iv) entre 20% et 88% d'eau, et
- la réalisation d'un traitement thermique (40) de vitrification sur la pièce imprégnée par la composition d'imprégnation de sorte à obtenir un verre de protection contre l'oxydation comprenant au moins de la silice, un oxyde de M1 et un oxyde de M2.

2. Procédé selon la revendication 1, dans lequel le précurseur de fondant comprend au moins du nitrate de sodium, du nitrate de potassium, ou un mélange de ces composés.

3. Procédé selon la revendication 1 ou 2, dans lequel le précurseur de modificateur de réseau comprend au moins un nitrate d'un métal alcalino-terreux.

4. Procédé selon la revendication 3, dans lequel le précurseur de modificateur de réseau comprend au moins du nitrate de calcium et/ou du nitrate de magnésium.

5. Procédé selon l'une quelconque des revendications 1 à 4, dans lequel le précurseur de modificateur de réseau comprend au moins un nitrate d'un métal de transition ou d'un métal pauvre.

6. Procédé selon l'une quelconque des revendications 1 à 5, dans lequel la composition d'imprégnation comprend en outre un stabilisant acide présent en une teneur massique comprise entre 0,05% et 10%.

7. Procédé selon la revendication 6, dans lequel le stabilisant acide est choisi parmi l'acide borique H₃BO₃, l'acide phosphorique H₃PO₄, l'acide nitrique HNO₃ ou un mélange de ces composés.

8. Procédé selon l'une quelconque des revendications 6 ou 7, dans lequel la composition d'imprégnation comprend en pourcentages massiques :
- entre 10% et 60% de silice colloïdale,
- entre 0,5% et 20% de précurseur de fondant,
- entre 0,5% et 20% de précurseur de modificateur de réseau,
- entre 0,05% et 10% de stabilisant acide, et
- de l'eau entre 20% et 88%.

9. Procédé selon l'une quelconque des revendications 1 à 7, dans lequel la composition d'imprégnation comprend en pourcentages massiques :
- entre 1% et 10% de silice colloïdale,
- entre 20% et 35% d'un phosphate d'aluminium,
- entre 1% et 7% de précurseur de fondant,
- entre 1% et 5% de précurseur de modificateur de réseau, et
- de l'eau entre 50% et 77%,
et dans lequel on obtient, après le traitement thermique, le verre de protection contre l'oxydation et une phase aluminophosphate anti-catalytique.

10. Procédé selon l'une quelconque des revendications 1 à 9, dans lequel la pièce est une pièce de friction.

## Patentansprüche

1. Verfahren zum Schützen eines Teils aus Verbundmaterial, das Kohlenstoff enthält, gegen Oxidation, umfassend:
- die Imprägnation (30) einer internen Porosität des Teils durch eine Imprägnierungszusammensetzung, die in Massenprozent (i) zwischen 1 % und 60 % kolloidales Siliziumdioxid, (ii) zwischen 0,5 % und 20 % eines Flussmittel-Vorläufers, umfassend zumindest ein Nitrat eines Alkalimetalls M1, (iii) zwischen 0,5 % und 20 % eines Netzwerkwandler-Vorläufers, umfassend zumindest ein Nitrat eines Elements M2, das aus den Erdalkalimetallen, den Übergangsmetallen, den unedlen Metallen oder den Lanthaniden ausgewählt ist, oder ein Oxynitrat eines Elements M2, das aus den Metallen oder den Lanthaniden ausgewählt ist, und (iv) zwischen 20 % und 88 % Wasser umfasst, und
- die Durchführung einer thermischen Behandlung (40) zur Verglasung an dem mit der Imprägnierungszusammensetzung imprägnierten Teil auf eine Weise, um ein Glas zum Schutz gegen Oxidation zu erhalten, das zumindest Siliziumdioxid, ein Oxid von M1 und ein Oxid von M2 umfasst.

2. Verfahren nach Anspruch 1, wobei der Flussmittel-Vorläufer zumindest Natriumnitrat, Kaliumnitrat oder eine Mischung dieser Verbindungen umfasst.

3. Verfahren nach Anspruch 1 oder 2, wobei der Netzwerkwandler-Vorläufer zumindest ein Nitrat eines Erdalkalimetalls umfasst.

4. Verfahren nach Anspruch 3, wobei der Netzwerkwandler-Vorläufer zumindest Kalziumnitrat und/oder Magnesiumnitrat umfasst.

5. Verfahren nach einem der Ansprüche 1 bis 4, wobei der Netzwerkwandler-Vorläufer zumindest ein Nitrat eines Übergangsmetalls oder eines unedlen Metalls umfasst.

6. Verfahren nach einem der Ansprüche 1 bis 5, wobei die Imprägnierungszusammensetzung ferner einen Säurestabilisator umfasst, der in einem Massengehalt zwischen 0,05 % und 10 % vorhanden ist.

7. Verfahren nach Anspruch 6, wobei der Säurestabilisator aus Borsäure H₃BO₃, Phosphorsäure H₃PO₄, Salpetersäure HNO₃ oder einer Mischung dieser Verbindungen ausgewählt ist.

8. Verfahren nach einem der Ansprüche 6 oder 7, wobei die Imprägnierungszusammensetzung in Massenprozent umfasst:
- zwischen 10 % und 60 % kolloidales Siliziumdioxid,
- zwischen 0,5 % und 20 % des Flussmittel-Vorläufers,
- zwischen 0,5 % und 20 % des Netzwerkwandler-Vorläufers,
- zwischen 0,05 % und 10 % des Säurestabilisators, und
- Wasser zwischen 20 % und 88 %.

9. Verfahren nach einem der Ansprüche 1 bis 7, wobei die Imprägnierungszusammensetzung in Massenprozent umfasst:
- zwischen 1 % und 10 % kolloidales Siliziumdioxid,
- zwischen 20 % und 35 % eines Aluminiumphosphats,
- zwischen 1 % und 7 % des Flussmittel-Vorläufers,
- zwischen 1 % und 5 % des Netzwerkwandler-Vorläufers, und
- Wasser zwischen 50 % und 77 %,
und wobei nach der thermischen Behandlung das Glas zum Schutz gegen Oxidation und eine antikatalytische Aluminiumphosphat-Phase erhalten werden.

10. Verfahren nach einem der Ansprüche 1 bis 9, wobei das Teil ein Reibungsteil ist.

## Claims

1. A method for protection against oxidation of a composite material part comprising carbon, comprising:
- impregnating (30) an internal porosity of the part with an impregnation composition comprising, as percentages by weight: (i) between 1% and 60% of colloidal silica, (ii) between 0.5% and 20% of a flux precursor comprising at least one alkali metal nitrate M1, (iii) between 0.5% and 20% of a lattice modifying precursor comprising at least one nitrate of an element M2 which is chosen from alkaline earth metals, transition metals, poor metals or lanthanides or an oxynitrate of an element M2 which is chosen from metals or lanthanides, and (iv) between 20% and 88% of water, and
- performing a vitrification heat treatment (40) on the part impregnated with the impregnation composition to obtain a glass for protection against oxidation comprising at least silica, an oxide of M1 and an oxide of M2.

2. The method according to claim 1, wherein the flux precursor comprises at least sodium nitrate, potassium nitrate, or a mixture of these compounds.

3. The method according to claim 1 or 2, wherein the lattice modifying precursor comprises at least one nitrate of an alkaline earth metal.

4. The method according to claim 3, wherein the lattice modifying precursor comprises at least one calcium nitrate and/or magnesium nitrate.

5. The method according to any one of claims 1 to 4, wherein the lattice modifying precursor comprises at least one nitrate of a transition metal or of a poor metal.

6. The method according to any one of claims 1 to 5, wherein the impregnation composition further comprises an acid stabilizer present in a weight content comprised between 0.05% and 10%.

7. The method according to claim 6, wherein the acid stabilizer is chosen from boric acid H₃BO₃, phosphoric acid H₃PO₄, nitric acid HNO₃ or a mixture of these compounds.

8. The method according to any one of claims 6 or 7, wherein the impregnation composition comprises in weight percent:
- between 10% and 60% of colloidal silica;
- between 0.5% and 20% of flux precursor;
- between 0.5% and 20% of lattice modifying precursor;
- between 0.05% and 10% of acid stabilizer; and
- between 20% and 88% of water.

9. The method according to any one of claims 1 to 7, wherein the impregnation composition comprises in weight percent:
- between 1% and 10% of colloidal silica;
- between 20% and 35% of aluminum phosphate;
- between 1% and 7% of flux precursor;
- between 1% and 5% of lattice modifying precursor; and
- between 50% and 77% of water;
and wherein, after the heat treatment, the oxidation protection glass and an anti-catalytic aluminophosphate phase is obtained.

10. The protection method according to any one of claims 1 to 9, wherein the part is a friction part.
